# EUROPÄISCHE PATENTANMELDUNG

(11) **EP 2 842 894 A1**
(43) Veröffentlichungstag der Anmeldung: **04.03.2015**
(21) Anmeldenummer: 14178523.8
(22) Anmeldetag: 25.07.2014
(51) Int. Cl.: B65G 53/46

(54) **Zellenradschleuse, Zellenrad sowie Verwendung der Zellenradschleuse**

(30) Priorität: 30.08.2013 DE 102013109503
(71) Anmelder: Ernst Pracher GmbH, 85368 Moosburg a.d. Isar (DE)
(72) Erfinder: Beibl, Benedikt, 85368 Moosburg (DE); Pracher, Ernst, 85368 Moosburg (DE)
(74) Vertreter: Kuhnen & Wacker

(57) **Zusammenfassung**

Bei bekannten Zellradschleusen treten bei deren Beschickung Schwingungen, Materialbelastungen und Lärmbelastungen auf. Erfindungsgemäß wird dabei eine Zellenradschleuse mit einem eine Einlassöffnung (21) und eine Auslassöffnung aufweisenden Gehäuse (20) und einem wenigstens einem Flügel (12) aufweisenden und um eine Drehachse (D) drehbar gelagerten Zellenrad vorgeschlagen. Der wenigstens eine Flügel (12) ist schräg zur Drehachse (D) ausgebildet und weist eine größere Länge als eine lichte Weite einer Diagonalen der Einlassöffnung (21) auf, sodass ein Medium beim Befüllen nur auf einen Teilabschnitt des Flügels (12) fällt.

## Beschreibung

Die Erfindung betrifft eine Zellenradschleuse zum Dosieren, Portionieren, Abdichten oder Fördern eines Mediums, insbesondere von Schüttgut, ein Zellenrad sowie eine Verwendung der Zellenradschleuse.

Zellenradschleusen werden u.a. zum Dosieren von Schüttgütern, wie z.B. granulatartigem Fördergut verwendet. Eine Zellenradschleuse besteht aus einem auf einer Welle drehend gelagerten Zellenrad mit einer Trommel und einer Mehrzahl von davon radial angeordneten Flügeln und einem das Zellenrad umschließende Gehäuse. Das Gehäuse weist dabei eine für die Befüllung notwendige Einlassöffnung und eine das Schüttgut dosierend abgebende Auslassöffnung auf. Die Dosierung erfolgt hierbei mittels des Zellenrads, die durch die Zellradflügel umgesetzt wird. Neben der Dosierung und dem Portionieren ist aber auch die Förderung eines in einem Behältnis unter z.B. Inertgas stehenden Schüttgutes möglich, ohne dass Umgebungsluft mit dem im Behältnis gelagerten Schüttgut in Kontakt tritt. Das Schüttgut lässt sich so von dem unter z.B. Inertgas stehenden Raum, Leistungsabschnitt oder dergleichen an einen anderen Raum, Leistungsabschnitt oder dergleichen übergeben ohne dass es zu einer nennenswerten Durchmischung der das Schüttgut begleitenden Gase kommt. In gleicher Weise kann die Zellenradschleuse verwendet werden, um Schüttgut ohne nennenswerten Druckverlust zu übergeben.

Bei bekannten Zellenradschleusen besteht das Problem, dass eine wiederkehrende, sprungartige Kräftebelastung an den zur Zellenradachse parallel ausgeführten, sich radial erstreckenden Flügeln wirkt, wenn das Schüttgut bei Betrieb der Zellenradschleuse auf die freie, radial äußere Flügelkanten des Zellenrades trifft. Die angesprochene Kräftebelastung führt zu Schwingungen und in der Folge zu einer geringeren Lebensdauer der Zellenradschleuse sowie einer unerwünschten Lärmbelastung.

Aus US 5,114,053 A ist eine Zellenradschleuse bekannt, bei der die Einlassöffnung versetzt zur Drehachse des Zellenrads ausgestaltet ist. Im Bereich der Einlassöffnung ist ferner eine Schräge vorgesehen, um zu verhindern, dass Schüttgutkörner zwischen den führenden Kanten der Flügel und der Gehäusewand bei Rotation zermahlen werden Die Kontur der Einlassöffnung ist darüber hinaus derart fünfeckig ausgestaltet, dass hierdurch eine Kraftzunahme aufgrund von eingeklemmtem Schüttgut zwischen den führenden Kanten der Flügel 5 und der Gehäusewand 10 verhindert wird und auch darüber hinaus einer Erhöhung des Gesamtgeräusches der Rotoren und einem erhöhten Verschleiß entgegengewirkt. Allerdings treten dabei nach wie vor Schwingungen und entsprechende Materialbelastungen an den Flügeln auf.

Die EP 2 388 217 A1 offenbart eine Zellenradschleuse mit einem Zellenrad, bei dem die Flügel gegenüber der Drehachse verwunden sind, wobei das Verwinden der Flügel eine Rückhaltewirkung zum Zurückhalten des Fördergutes bewirkt. Die vorstehenden von der Erfindung gelösten Probleme werden jedoch nicht adressiert.

Dementsprechend ist es die Aufgabe der vorliegenden Erfindung, eine Zellenradschleuse, insbesondere ein Zellenrad, derart auszubilden, dass Schwingungen und damit einhergehende Materialbelastungen und Geräuschentwicklung an den Flügeln wirksam vermieden werden.

Diese Aufgabe wird durch eine Zellenradschleuse mit den Merkmalen des Anspruchs 1 gelöst.

Erfindungsgemäß wird dabei eine Zellenradschleuse mit einem eine Einlassöffnung und eine Auslassöffnung aufweisenden Gehäuse und einem wenigstens einem Flügel aufweisenden und um eine Drehachse drehbar gelagerten Zellenrad vorgeschlagen. Der wenigstens eine Flügel ist schräg zur Drehachse ausgebildet und weist eine größere Länge als eine lichte Weite einer Diagonalen der Einlassöffnung auf, sodass ein Medium beim Befüllen nur auf einen Teilabschnitt des Flügels fällt.

Das zu fördernde bzw. zu dosierende Medium trifft aufgrund der erfindungsgemäßen Maßnahmen nicht schlagartig auf die freie, radial äußere Kante des jeweiligen Flügels auf. Vielmehr wird der Flügel nach und nach belastet. So kann ein beim Befüllen der Zellenradschleuse auftretendes Biegemoment an den Flügeln wirksam verringert werden, da lediglich auf einen Teilabschnitt des Flügels Schüttgut fällt. Folglich wird auf überraschend einfache Weise durch Verringern der Beanspruchung der Mehrzahl der Flügel eine höhere Lebensdauer der Zellenradschleuse erreicht und Geräuschsentwicklung vermieden. Die geringere Geräuschentwicklung entlastet merklich die in der Umgebung arbeitenden Personen.

Da lediglich auf einen Teilabschnitt des wenigstens einen Flügels das Medium fällt, werden durch das Fallmedium verursachte Schwingungen verringert und einer frühzeitigen Materialermüdung wird entgegengewirkt. Grund dafür ist allen voran, dass die Verbindungslinie zwischen Trommel und Flügel größer ist, als der Teilabschnitt des Flügels, auf den beim Beschicken das Schüttgut fällt.

Weitere Ausgestaltungen der erfindungsgemäßen Zellenradschleuse sind Gegenstand der abhängigen Ansprüche 2 bis 10, wie nachstehend näher erläutert.

Eine auf einer Radialebene projizierte Breite des Flügels kann ferner größer als eine Breite der Einlassöffnung sein. Somit werden wirksam Schwingungen sowie Materialbelastungen vermieden, da bei Betrachtung in Draufsicht der in die Einlassöffnung eingreifende Flügel nicht vollständig auf ein Schüttgut in der Einlassöffnung trifft.

Der wenigstens eine Flügel kann zudem den Teilabschnitt in Längsrichtung des Zellenrads aufweisen. Das Zellenrad ist dabei in Längsrichtung länger ausgebildet als die Einlassöffnung, sodass das Zellenrad, und hier insbesondere Kanten des Zellenrads, in einem das Zellenrad umschlossene Gehäuse geführt wird/werden.

Die Einlassöffnung kann darüber hinaus als Viereck, bevorzugt als Rechteck, besonders bevorzugt als Quadrat, ausgebildet sein. Durch eine derartige einfache Ausbildung der Einlassöffnung können daran Standardanschlüsse angeschlossen werden.

Das Zellenrad kann überdies jeweils an dessen Stirnseiten wenigstens einen Stirnsteg aufweisen. Dadurch, dass an den Stirnseiten wenigstens ein Stirnsteg vorgesehen ist, kann das Medium in einer rotierenden Kammer bzw. Einzelzelle aufgenommen werden und durch Drehung an die Auslassöffnung abgegeben werden. Indem ein derartiges Kammersystem im Zellenrad ausgebildet ist, kommt das Medium vorteilhaft nicht mit den Stirnseiten des das Zellenrad umschließende Gehäuses in Kontakt. Dadurch kann wirksam vermieden werden, dass Schüttgut in Längsrichtung zwischen Zellenrad und Gehäuse einklemmt bzw. zermahlen wird oder das Zellenrad bzw. das Gehäuse beschädigt wird. Vorteilhaft ist weiterhin, dass die Stirnstege die Schwingungen von den benachbarten Flügeln aufnehmen und so diese wirksam kompensieren und das Zellenrad stabiler ausgestaltet ist, was u.a. zur Lärmreduzierung führt.

Der Flügel kann ferner unter einem Winkel bezogen auf die Drehachse an einer Trommel des Zellenrads angeordnet sein, der größer als der Winkel der Diagonalen der Einlassöffnung ist. Gerade durch diese derartig schräge Ausbildung des Flügels an der Trommel des Zellenrads, ist der Flügel aufgrund einer relativ langen Verbindungslinie zwischen Trommel und Flügel verglichen mit einer Verbindungslinie, bei der der Flügel wesentlich parallel zur Drehachse oder der Winkel kleiner als der Winkel der Diagonalen der Einlassöffnung ist, sehr stabil. Dadurch können Schwingungen und Materialbelastungen wirksam vermieden werden, da bei Betrachtung in Draufsicht der in die Einlassöffnung eingreifende Flügel nicht vollständig auf ein Schüttgut in der Einlassöffnung trifft.

Der Flügel kann des Weiteren geradläufig ausgebildet sein. Unter geradläufig ist zu verstehen, dass, wenn der Flügel von der Trommel abgewickelt werden würde, der Flügel gerade ist. Dadurch kann das Zellenrad relativ einfach hergestellt werden.

Der wenigstens eine Flügel kann schraubenförmig an der Trommel des Zellenrads angeordnet sein. Mit einer schraubenförmigen Anordnung können sowohl das beim Befüllen auftretende Biegemoment als auch die Schwingungen weiter verringert werden, da der Flügel über eine größere Verbindungslinie in Umfangsrichtung mit der Trommel des Zellenrads verbunden ist.

Die Zellenradschleuse kann als Durchgangsschleuse oder Förderschleuse ausgebildet sein. Dadurch kann die Zellenradschleuse in deren bereits bekannten Einsatzgebieten verwendet werden.

Das Medium kann Schüttgut oder Fluid sein. Das Schüttgut kann granulatartiges bzw. rieselfähiges Fördergut sein. Die Schüttgüter und Fluide können Lebensmittel, Baustoffe, chemische Grundstoffe usw. sein.

Gemäß einem weiteren Aspekt der vorliegenden Erfindung wird nach Anspruch 11 ein Zellenrad, insbesondere für eine Zellenradschleuse nach wenigstens einem der Ansprüche 1 bis 10, mit einem wenigstens einen Flügel aufweisenden und um eine Drehachse drehbar gelagerten Zellenrad vorgeschlagen. Der wenigstens eine Flügel ist schräg zur Drehachse ausgebildet und weist eine größere Länge als eine lichte Weite einer Diagonalen der Einlassöffnung auf, sodass ein Medium beim Befüllen nur auf einen Teilabschnitt des Flügels fällt.

Gemäß einem weiteren Aspekt der vorliegenden Erfindung wird nach Anspruch 12 eine Verwendung einer Zellenradschleuse zum Dosieren, Portionieren, Abdichten oder Fördern eines Mediums vorgeschlagen.

Hinsichtlich der Vorteile des erfindungsgemäßen Zellenrads bzw. der erfindungsgemäßen Verwendung zur Zellenradschleuse wird auf die vorstehenden entsprechenden Ausführungen verwiesen.

Die vorstehend beschriebenen Merkmale und Funktionen der vorliegenden Erfindung sowie weitere Aspekte und Merkmale werden nachfolgend anhand einer detaillierten Beschreibung von bevorzugten Ausführungsformen unter Bezugnahme auf die beigefügten Figuren weiter beschrieben. Hierbei zeigt:
- Fig. 1: eine perspektivische Ansicht einer ersten Ausführungsform einer erfindungsgemäßen Zellenradschleuse;
- Fig. 2: eine perspektivische Ansicht eines Zellenrads der ersten Ausfiihrungsform der erfindungsgemäßen Zellenradschleuse nach Fig. 1;
- Fig. 3: eine Draufsicht eines Zellenrads der ersten Ausführungsform der erfindungsgemäßen Zellenradschleuse nach Fig. 1;
- Fig. 4: eine teilweise Draufsicht der ersten Ausführungsform der erfindungsgemäßen Zellenradschleuse nach Fig. 1;
- Fig. 5: eine teilweise Draufsicht einer zweiten Ausführungsform der erfindungsgemäßen Zellenradschleuse;

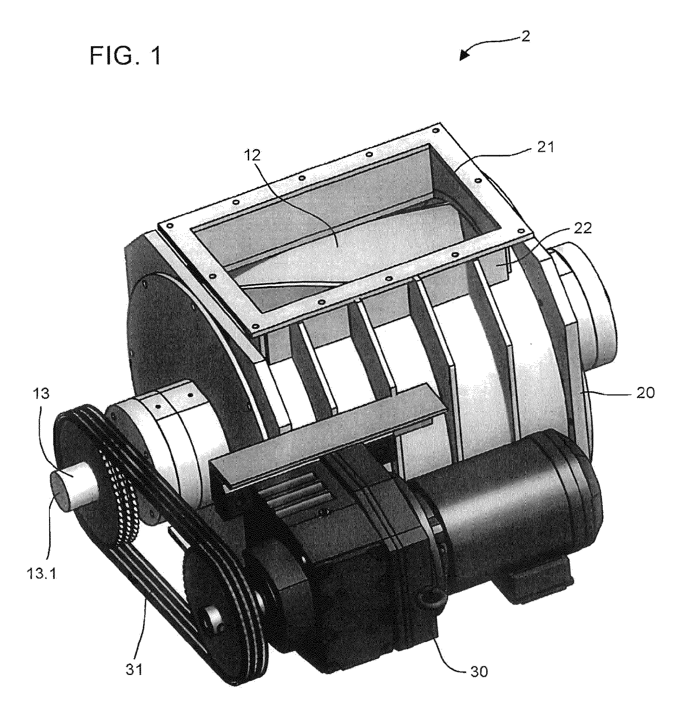

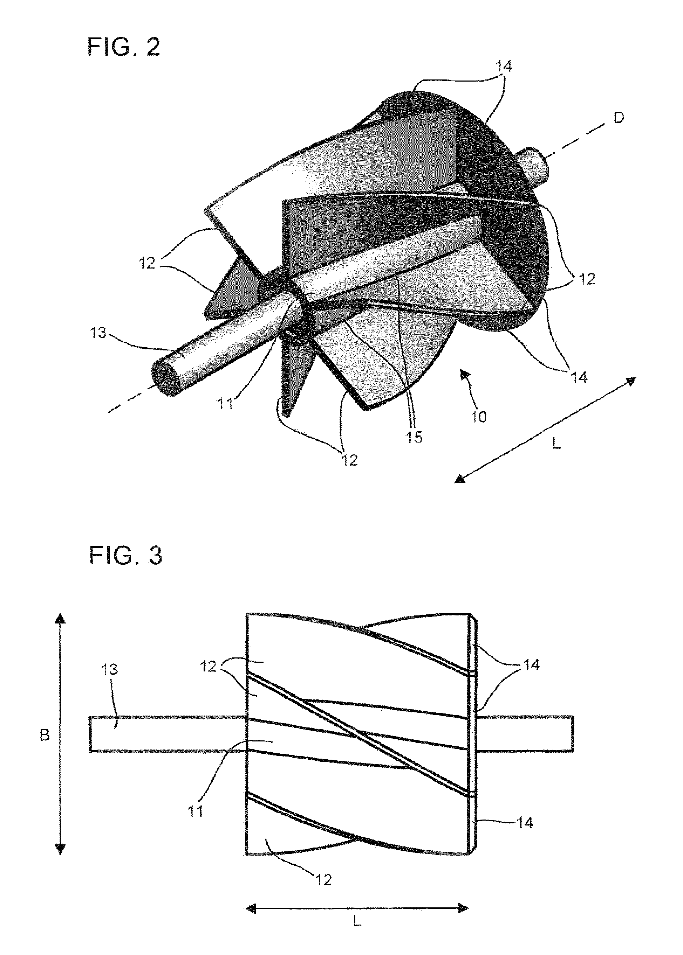

Bezugnehmend auf Fig. 1 wird eine perspektivische Ansicht einer ersten Ausführungsform einer erfindungsgemäßen Zellenradschleuse 1 erläutert. In Fig. 2 ist ferner eine perspektivische Ansicht eines Zellenrads und in Fig. 3 eine Draufsicht eines Zellenrads der ersten Ausführungsform der erfindungsgemäßen Zellenradschleuse gezeigt.

Ein Zellenrad 10 besteht aus einer Trommel 11 und sechs gleichmäßig in Umfangsrichtung an der Trommel 11 angeordneten, sich in Radialrichtung erstreckenden Flügeln 12. Zwischen den in Umfangsrichtung benachbarten Flügeln 12 sind stirnseitig angeordnete Stirnstege 14 ausgebildet. Zur einfachen Darstellung sind in Fig. 2 lediglich die hinteren Stirnstege 14 gezeigt. Die Trommel 11 ist in Längsrichtung L hohl ausgebildet. In der hohl ausgebildeten Trommel 11 ist eine Drehwelle 13 derart fest eingesetzt, dass deren Relativbewegung verhindert wird. Die durch eine Verbindungslinie 15 dargestellte Verbindung zwischen Trommel 10 und der Drehwelle 13 kann durch Formschluss, Kraftschluss bzw. Reibschluss oder Stoffschluss ausgestaltet sein. Im vorliegenden Fall sind die Flügel 12 an die Trommel 11 geschweißt. Die Drehwelle 13 ist drehend an dem Gehäuse 20, genauer an zwei in Längsrichtung L gegenüberliegenden Lagern 21, 22 (nicht gezeigt), gelagert.

Das Gehäuse 20 ist mit einer rechteckigen Einlassöffnung 21 ausgebildet, die an der Oberseite des Gehäuses 20 vorgesehen ist und an der sich ein Einlassstutzen 22 anschließt. Darüber kann eine Beschickung eines Mediums zur Zellenradschleuse 1 vorgenommen werden. Eine Auslassöffnung (nicht gezeigt) ist der Einlassöffnung 21 gegenüberliegend in dem Gehäuse 20 ausgebildet, um das Medium entsprechend dosiert wieder abzugeben.

Die Drehwelle 13 ist an deren ersten Ende 13.1 über einen Keilriemen 31 mit einer drehenden elektrischen Maschine bzw. elektrischen Motor 30 verbunden, um eine Drehbewegung an die Drehwelle 13 und schließlich an das Zellenrad 10 zu übertragen. Die elektrische drehende Maschine 30 ist an dem Gehäuse 20 befestigt und ist derart ausgestaltet und eingerichtet, um einen kontinuierlichen oder intermittierenden Betrieb auszuführen.

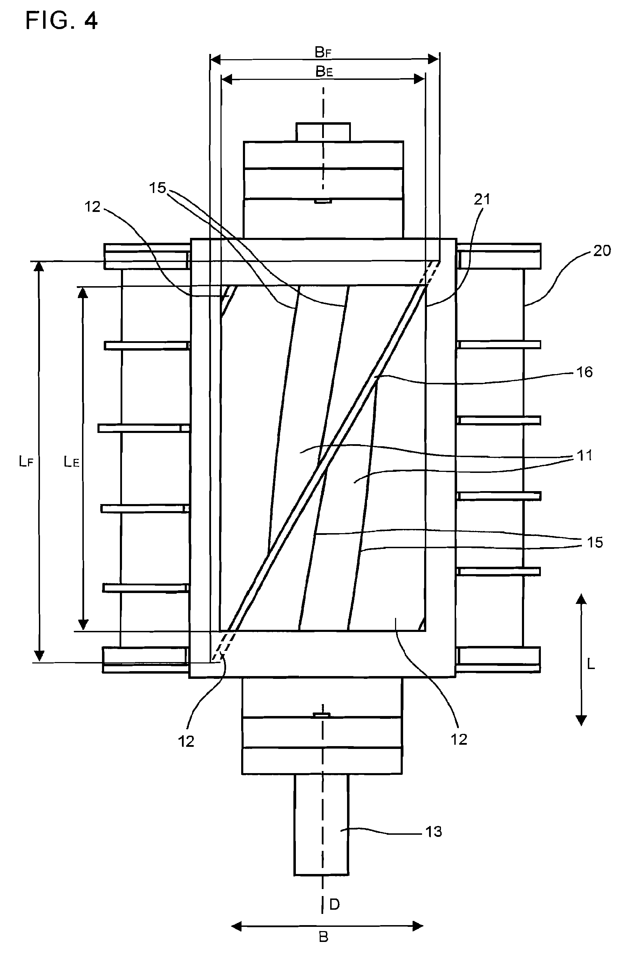

In Fig. 4 ist eine teilweise Draufsicht der ersten Ausführungsform der erfindungsgemäßen Zellenradschleuse 1 dargestellt. Hierbei ist ein Flügel 12 mit dessen entsprechender Flügelkante 16 zu sehen, die sich von links unten nach rechts oben erstreckt. Besonders gut erkennbar ist ferner, dass eine auf einer Radialebene projizierte Breite B_{F} des Flügels 12 größer als eine Breite B_{E} der Einlassöffnung 21 ist. Eine Länge L_{F} des Flügels 12 ist ebenfalls größer als eine Länge L_{E} der Einlassöffnung 21. Indem die Verbindungslinie 15 länger als der Teilabschnitt bzw. die Flügelkante 16 ist, werden die beim Befüllen auftretenden mechanischen Belastungen von dem Zellenrad 10 besser aufgenommen. Da somit lediglich ein Teilabschnitt, d.h. nicht vollständig über die komplett verlaufende Flügellänge, des eingreifenden Flügels 12 beim Befüllen auf ein Schüttgut in der Einlassöffnung 21 bei einer Draufsicht trifft, werden die Schwingungen und die Materialbelastungen des Flügels 12 verringert, wodurch zusätzlich noch die Lärmbelastung gesenkt wird.

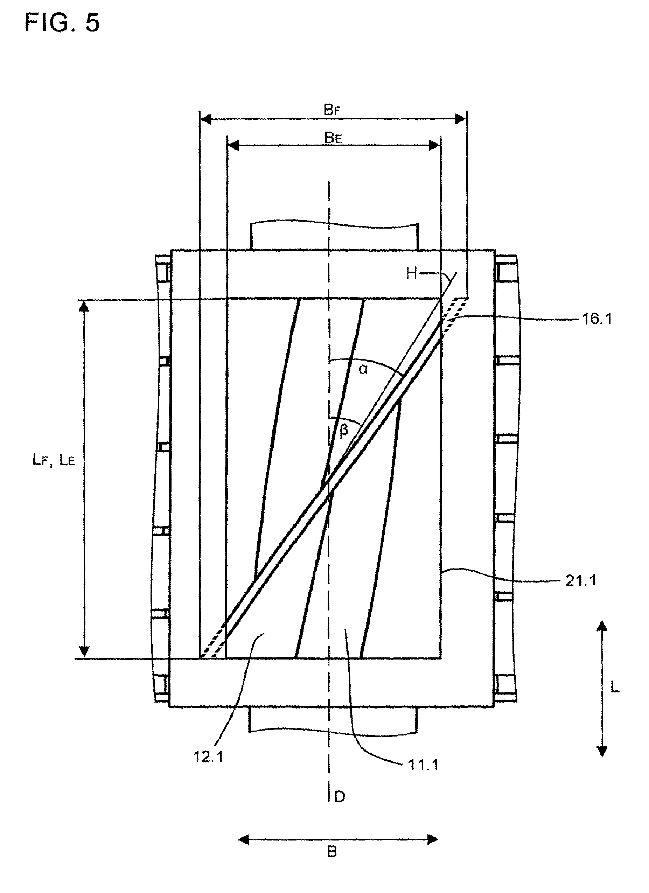

Fig. 5 zeigt eine teilweise Draufsicht einer zweiten Ausführungsform einer erfindungsgemäßen Zellenradschleuse 1.1. Die Flügel 12.1 sind bei dem Zellenrad 10.1 derart verändert, dass Länge L_{F} des Flügels 12.1 gleich zur Länge L_{E} der Einlassöffnung 21.1 ist und die projizierte Breite B_{F} des Flügels 12.1 größer als die Breite B_{E} der Einlassöffnung 21.1 ist. Der Flügel 12.1 ist unter einem Winkel α bezogen auf die Drehachse D an einer Trommel 11.1 des Zellenrads 10 angeordnet, der größer als der Winkel β der Diagonalen der Einlassöffnung 21.1 ist. Die Diagonale der Einlassöffnung 21.1 ist mit einer Hilfslinie H dargestellt.

Bei der vorstehenden Erläuterung wird lediglich ein Flügel 12 des Zellenrads 10 beschrieben; diese Beschreibung gilt jedoch in gleicher Weise für die übrigen an der Trommel 11 angeordneten Flügel 12.

Obwohl im vorliegenden Fall die Trommel 11 des Zellenrads 10 drehstarr auf der Drehwelle 13 gelagert ist, können Trommel und Welle einstückig ausgebildet sein.

Die in dem Gehäuse 20 ausgebildete Auslassöffnung 23 ist der Einlassöffnung 21 gegenüberliegend angeordnet; jedoch kann eine Auslassöffnung auch abweichend von dieser Position ausgebildet sein.

Obgleich die Anzahl der Flügel 12 der vorstehenden Ausführungsform sechs ist, kann die Anzahl der Flügel 12 auch von der Anzahl sechs verschieden sein. Die Anzahl der Flügel bestimmt den Rauminhalt der Kammern bzw. Taschen und damit die zu fördernde Menge an Medium, das von der Einlassöffnung über eine Drehbewegung des Zellenrads an die Auslassöffnung dosierend übergeben wird.

Bei der in Fig. 4 dargestellten Ausführungsform ist zu erkennen, dass die Einlassöffnung 21 und das Zellenrad 10 derart miteinander abgestimmt sind, dass das Schüttgut nur auf einen Teilabschnitt des Flügels 12 in Längsrichtung L fällt, nämlich die Länge L_{E} der Einlassöffnung 21, und nur auf einen Teilabschnitt des Flügels 12 in Breitenrichtung B fällt, nämlich Breite B_{E} der Einlassöffnung 21. Allerdings kann auch die Länge L_{F} des Flügels 12 größer als die Länge L_{E} der Einlassöffnung 21 sein und die projizierte Breite B_{F} des Flügels 12 gleich zur Breite B_{E} der Einlassöffnung 21 sein und umgekehrt.

Obschon die Drehwelle 13 mit einer drehenden elektrischen Maschine bzw. elektrischen Motor 30 angetrieben wird, ist ein Antrieb ebenfalls mit pneumatischen oder hydraulischen Geräten umsetzbar.

Die Einlassöffnung 21 ist in den beiden Ausfiihrungsformen rechteckig ausgebildet; allerdings kann die Einlassöffnung bei Betrachtung in Draufsicht jede beliebige Form aufweisen, wie z.B. Kreis, Trapez, etc.

Obwohl zwischen den in Umfangsrichtung angeordneten Flügeln 12 jeweils ein Stirnsteg 14 pro Seite ausgebildet ist, können die an einer Seite ausgebildeten Stirnstege 14 auf gleiche Weise aus einer flachen Scheibe bestehen, die stirnseitig an der Trommel 11 und an die Mehrzahl an Flügel 12 angeordnet ist.

## Patentansprüche

1. Zellenradschleuse (1, 1.1) mit einem eine Einlassöffnung (21) und eine Auslassöffnung aufweisenden Gehäuse (20) und einem wenigstens einen Flügel (12, 12.1) aufweisenden und um eine Drehachse (D) drehbar gelagerten Zellenrad (10, 10.1), wobei der Flügel (12, 12.1) schräg zur Drehachse (D) ausgebildet ist, **dadurch gekennzeichnet, dass** der Flügel (12, 12.1) eine größere Länge als eine lichte Weite einer Diagonalen der Einlassöffnung (21) aufweist, sodass ein Medium beim Befüllen nur auf einen Teilabschnitt des Flügels (12, 12.1) fällt.

2. Zellenradschleuse nach Anspruch 1, dadurch gekennzeichet, dass eine auf einer Radialebene projizierte Breite (B_{F}) des Flügels (12, 12.1) größer als eine Breite (B_{E}) der Einlassöffnung (21) ist.

3. Zellenradschleuse nach einem der Ansprüche 1 oder 2, **dadurch gekennzeichnet, dass** der wenigstens eine Flügel (12, 12.1) den Teilabschnitt in Längsrichtung (L) des Zellenrads (10, 10.1) aufweist.

4. Zellenradschleuse nach einem der Ansprüche 1 bis 3, **dadurch gekennzeichnet, dass** die Einlassöffnung (21) als Viereck, bevorzugt als Rechteck, besonders bevorzugt als Quadrat, ausgebildet ist.

5. Zellenradschleuse nach einem der Ansprüche 1 bis 4, **dadurch gekennzeichnet, dass** das Zellenrad (10, 10.1) jeweils an dessen Stirnseiten wenigstens einen Stirnsteg (14) aufweist.

6. Zellenradschleuse nach einem der Ansprüche 1 bis 5, **dadurch gekennzeichnet, dass** der Flügel (12, 12.1) unter einem Winkel (α) bezogen auf die Drehachse (D) an einer Trommel (11, 11.1) des Zellenrads (10, 10.1) angeordnet ist, der größer als der Winkel (β) der Diagonalen der Einlassöffnung (21) ist.

7. Zellenradschleuse nach einem der Ansprüche 1 bis 6, **dadurch gekennzeichnet, dass** der wenigstens eine Flügel (12, 12.1) geradläufig ausgebildet ist.

8. Zellenradschleuse nach einem der Ansprüche 1 bis 6, **dadurch gekennzeichnet, dass** der wenigstens eine Flügel (12, 12.1) schraubenförmig an der Trommel (11, 11.1) des Zellenrads (10, 10.1) angeordnet ist.

9. Zellenradschleuse nach einem der Ansprüche 1 bis 8, **dadurch gekennzeichnet, dass** sie als Durchgangsschleuse oder Förderschleuse ausgebildet ist.

10. Zellenradschleuse nach einem der Ansprüche 1 bis 9, **dadurch gekennzeichnet, dass** das Medium Schüttgut oder Fluid ist.

11. Zellenrad (10, 10.1), insbesondere für eine Zellenradschleuse (1, 1.1) nach wenigstens einem der Ansprüche 1 bis 10, mit einem wenigstens einem Flügel (12, 12.1) aufweisenden und um eine Drehachse (D) drehbar gelagerten Zellenrad (10, 10.1), wobei der Flügel (12, 12.1) schräg zur Drehachse (D) ausgebildet ist, **dadurch gekennzeichnet, dass** der wenigstens eine Flügel (12, 12.1) eine größere Länge als eine lichte Weite einer Diagonalen der Einlassöffnung (21) aufweist, sodass ein Medium beim Befüllen nur auf einen Teilabschnitt des Flügels (12, 12.1) fällt.

12. Verwendung einer Zellenradschleuse (1, 1.1) nach einem der Ansprüche 1 bis 10 zum Dosieren, Portionieren, Abdichten oder Fördern eines Mediums.
